(19) Europäisches Patentamt

European Patent Office

Office européen des brevets

(11) Publication number: **0 256 445 B1**

(12) EUROPEAN PATENT SPECIFICATION

(45) Date of publication of patent specification: **13.05.92**   (51) Int. Cl.⁵: **F16K 31/06**

(21) Application number: **87111452.6**

(22) Date of filing: **07.08.87**

(54) **Electrically operated fluid valve.**

(30) Priority: **15.08.86 GB 8619868**

(43) Date of publication of application:
**24.02.88 Bulletin 88/08**

(45) Publication of the grant of the patent:
**13.05.92 Bulletin 92/20**

(84) Designated Contracting States:
**DE FR GB IT**

(56) References cited:
**WO-A-87/00963        DE-A- 3 134 613**
**DE-B- 1 272 665        DE-U- 1 894 521**
**DE-U- 8 029 580        GB-A- 880 131**
**GB-A- 2 069 104        US-A- 2 267 515**

(73) Proprietor: **Eaton S.A.M.**
**17 Boulevard Prince Héréditaire Prince Albert**
**Monaco 98000(MC)**

(72) Inventor: **de Raco, Maurice**
**Ouartier Saint-Mathieu Chemin de Piechal**
**F-06130 Grasse(FR)**
Inventor: **Caravel, Michel**
**Villa St Joseph Ouartier St Antoine**
**Tourettes Levens 06690(FR)**

(74) Representative: **Douglas, John Andrew**
**Eaton House Staines Road**
**Hounslow Middlesex TW4 5DX(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a solenoid fluid valve having a moving magnetic part arranged to open and close a valve seat influenced by a return spring and aims to effect economies in a three-port fluid valve desired to deliver a high pressure output, or a low pressure output (purge or exhaust) according to electric inputs selected. The valve may in turn control the position of a slide valve in a hydraulic circuit, eg for shifting the different gears in a vehicle or machine gear box where the actual ratio shifting is performed by fluid power. Some such gear boxes will have automatic ratio selection too, ie be fully automatic.

In order to require minimum power input, the electrical valve must be sensitive. The present invention provides that a two part armature moved by a solenoid coil be used, with the starting, unenergized relative positions of the two having a finite but small spacing, which can be regulated, eg by hand. The invention is not concerned with the secondary, slide valve details, but with the solenoid valve. A two part armature is disclosed in WO-A-87/00963 unpublished at the claimed priority date of the present application, and referring to DE-U-8 029 580.

GB-A-2 069 104 discloses a solenoid valve according to the pre-characterizing portion of Claim 1 and represents the state of the art. Admittedly it is possible to set not only the magnetic characteristics, but also the amplitude of the stroke of the closure actuators, between two states of the valve. There are however many component parts and it is quite complicated to assemble the valve and to store the many components. The invention aims to simplify these, while maintaining adjustability of magnetic sensitivity, in the case either of either a normally closed or a normally open passageway between two adjacent ports; such passageway being fluidly connected towards the third port past a moving part of the armature, as in the state of the art.

DE-A1-3 134 613 shows a single end body having conduits and a valve seat formed in it, but the valve is not adjustable, has no plug-in facility for the end body, and the securing of the top and bottom end bodies are not clearly shown - certainly appearing more cumbesome eg. in Fig.2 of this publication.

The invention is characterized by claim 1, and subclaims define normally open and normally closed options, also a refinement where an outer jacket for the solenoid and forming part of the housing, is attached to the lower end member containing the first two ports and an upper end member accommodating the third port. In particular, Claim 2 and 3 provide advantageous and economical manufacturing methods, giving a robust and practical plug-in facility; securely retaining magnetic parts and the common housing end member.

Such a valve when unenergized can be of the type having an output port connected either to the higher pressure of two input ports, or to the lower pressure of two inputs. When energized it will have the output port connected to the other of the two input ports, in each case. One embodiment of each type will now be described in conjunction with drawings, in which

Figure 1 shows in side section a normally open valve; and

Figure 2 similarly shows a normally closed valve.

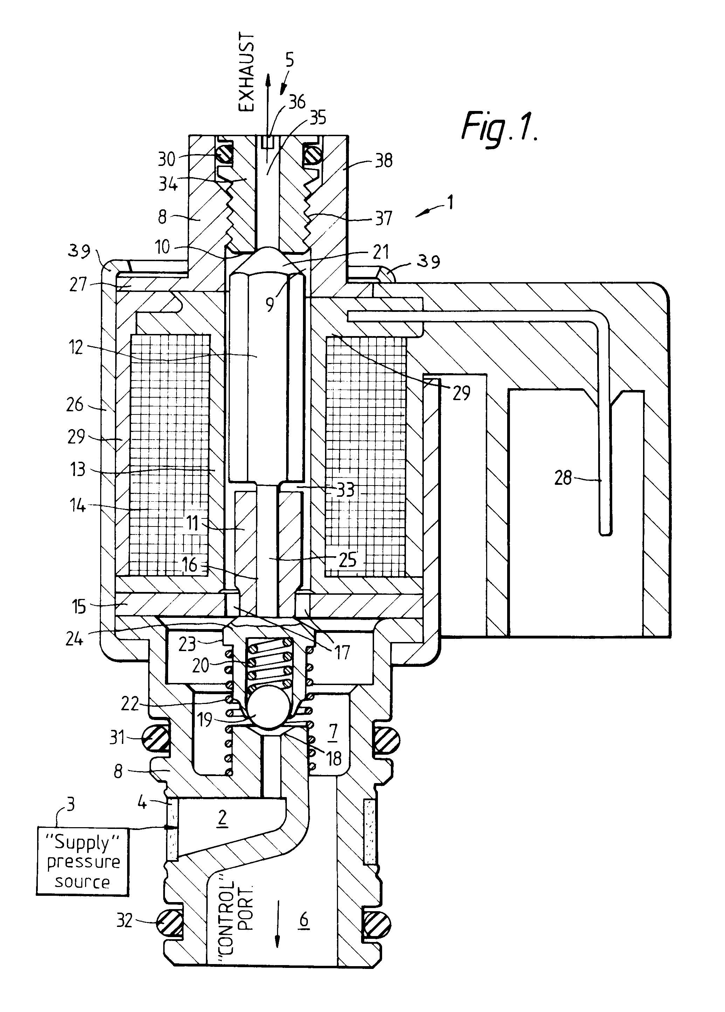

Referring to Figure 1, the solenoid valve 1 shown has a higher pressure input port 2 marked "supply" for connecting to a pressure source 3 through a filter 4, a lower pressure input port 5 marked "exhaust" eg for purging to a reservoir perhaps at atmospheric pressure, and an output port 6 for "control" purposes, eg to control a slide valve. The output port 6 can be connected by the solenoid either to the "supply" port 2 or to the "exhaust" port 5 through an interior space 7 within the housing 8 of the valve which is always in communication with output port 6.

The interior space 7 communicates with a further space 9 near an exhaust port valve seating 10 by virtue of clearances between, a fixed armature part 11 and a movable armature part 12 of hexagonal cross-section forming a two-part armature, and a cylindrical guide wall 13 for the movable armature, which wall is formed by a casing or former for the solenoid coil 14. The coil and its former are held in axial position by a transverse wall 15 through which the fixed armature 11 passes and is secured eg at a reduced diameter lower end portion 16. Transverse wall 15 has a number of holes 17 machined in it towards where the fixed armature passes through, to complete the fluid communication path between spaces 7 and 9.

A supply valve seating 18 in the fluid path between ports 2 and 6 is normally not obturated by a ball 19 held against a captive coil spring 20 as shown in the drawing, and the exhaust valve seating 10 in the fluid path between ports 6 and 5 is normally obturated by a formed end 21 of the movable armature 12.

Ball 19 is normally held off its seating 18 by a compression spring 22 acting against a shoulder formed on the outside of a holder 24 for the ball. The ball holder has an axial extension acting as a push rod 25 which abuts movable armature 12. Therefore the same means, ie compression spring 22, normally holds supply seating 18 unblocked, and exhaust seating 10 blocked.

When coil 14 is energized, armature 12 is driven magnetically against fixed armature 11 against sprung push rod 25, so that the ball holder 24 moves the ball hard enough against seating 18 to seat well by compressing the coil spring 20. At the same time the formed end 21 of the movable armature unblocks the exhaust seating 10.

The magnetic circuit comprises the armatures, transverse plate 15, the part 26 of housing 8 partly surrounding the coil and a top transverse piece 27 of the housing which is partly disc-shaped. The magnetic circuit may not completely surround the coil and armature, eg where the terminals 28 exit the toroidal coil former 29 or where holes 17 are required for fluid communication.

Movable armature 12 requires an irregular exterior, eg hexagonal both to bear against the sides and to allow fluid passage.

Fluid tightness may be assisted by O-rings 30, 31, and 32.

The normal or starting gap 33 between the armatures is critical, magnetically so as not to require initially an excess of electrical power, and mechanically to provide during energization just sufficient compression of spring 20 for satisfactory seating of ball 19. The return spring 22 needs to be strong enough to return the movable armature quickly on de-energization and to reseat it properly on exhaust seating 10, but spring 22 should not require excess electric magnetic power to compress it or to prevent good seating of ball 19. So the choice of armature gap 33 and the spring rates is a compromise.

According to another feature of the invention, magnetic gap 33 is externally adjustable, in that a cylindrical non-magnetic eg plastics part 34 axially bored at 35 for the second output, ie the exhaust fluid passage, has a screw-driver slot 36 and an external threading 37. This seat 10 is adjusted in position, and hence the normal air gap can be zeroed by screwing in, and set accurately by unscrewing a known number of turns or part-turns. The top of housing 8 can be a separate magnetic piece 38 having internal threading to cooperate with threading 37 and a flange to provide transverse magnetic circuit member 27. Piece 38 may be held by a turned over lip 39 from the vertical side 26 of the housing portion surrounding the coil. O-ring 30 in a groove eg between ridges on plastics part 34 will enable the screwing without losing fluid and pressure.

The valve can be energized with minimum power, but the hydraulic fluid output pressure at "control" port 6 can conveniently operate a slide valve between two positions which latter can handle much higher pressures, and so acts as a relay.

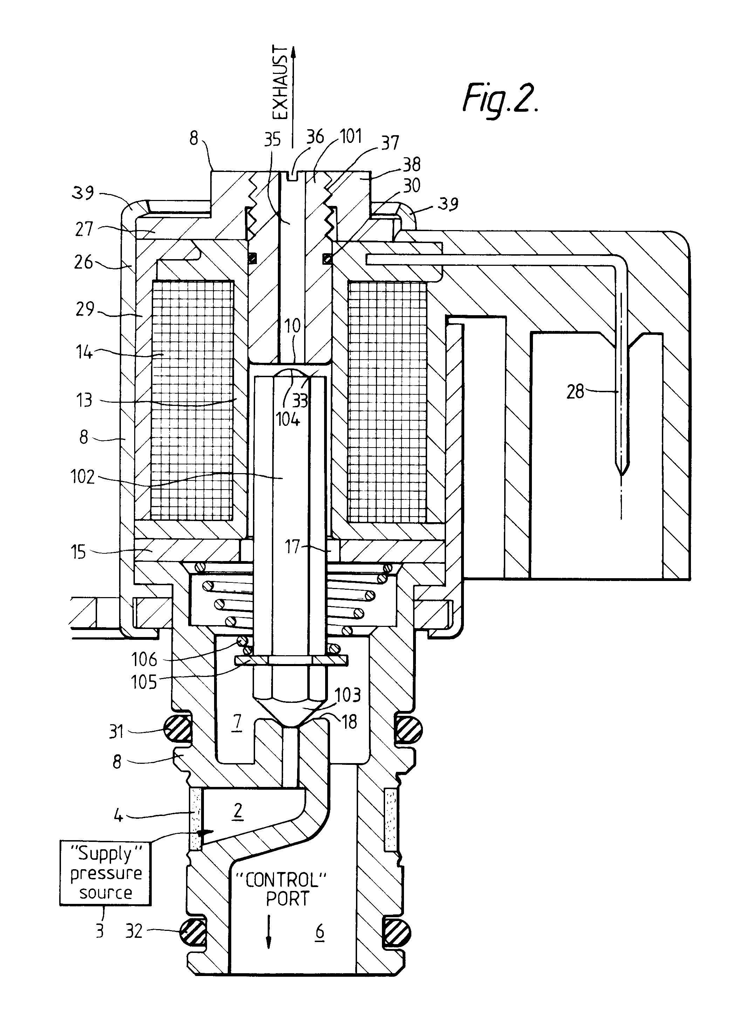

Referring to Figure 2, differences from Figure 1 are that the supply or high pressure seat 18 is normally closed and the exhaust seat 10 is normally open, when coil 14 is unenergized; also that the fixed armature 11 and adjustable non-magnetic adjustable piece 34 of Figure 1 are replaced by one fixed armature 101 which itself is adjustable or pre-selectable as regards axial position by screwdriver slot 36 and threading 37. Also movable armature 102 now differs in having a "supply" pressure closure formation 103 at its normally obturating lower end as well as the exhaust seat closure spherical shaping 104 at its normally unblocking upper end. The moving armature has also a ridge 105, eg a circular clip in a throat or groove therein, against which a compression spring 106 having its other end braced against the transverse wall 15, normally abuts seat 18. The spring 106 must be strong enough to overcome the supply pressure at this seat, but not strong enough to prevent opening by the energized coil, for a suitable adjustment of gap 33.

Analogously to the valve of Figure 1, two of the Figure 2 valves may relay control to respective slide valves in a hydraulically driven gear ratio shifter. When the coil 14 is unenergized, the sprung mobile armature abuts the supply seat but its hexagonal sides allow control port 6 to communicate with the open exhaust seat 10 and exhaust conduit 35. On energization, mobile armature 102 is drawn upwards to abut the fixed armature, to close off the exhaust, and to open seat 18 and the control port 6 to the "supply" pressure.

Otherwise, the magnetic circuit and other details are closely similar to Figure 1. Once again, the same spring opens one seat and closes the other; also gap 33 must be adjusted by screwing at 36, so that a minimum of power can overcome the return spring and close the exhaust seat effectively yet either seat can be opened with enough clearance for fluid passage - the spring itself must be strong enough to ensure that the supply seat can be closed effectively.

A powered gear-shifting system may use two of the Figure 1 valves (supply normally "on") and one of the valves illustrated in Figure 2 (supply 3 normally disconnected from the valve interior and hence from the controlled output port 6).

The use of a common housing end member to house two parts, a valve seat and a fluid passageway is known, in a general context, from the aforementioned DE-A-3134613, and from US-A-4790351 (unpublished at the priority date of the present patent). However, the combination of an adjustable magnetic gap, where adjustment need not vary a return spring rate, and such a common end member which can have a plug-in facility, in a compact and easy-to-manufacture form, gives an economical package unknown in the solenoid valve environment.

**Claims**

1. A solenoid fluid valve comprising input and output ports (2, 6) separated by a fluid passageway (7) within a valve housing (8); and a magnetic circuit including a movable magnetic part (12, 102) to condition a closure (18) of the passageway under the influence of bias (22, 106); a second magnetic part (11, 101) which is fixed during solenoid operation, and is spaced from the movable part by a magnetic gap (33), which gap affects the magnetic operating characteristics and is reversibly reduced in operation by each energization of the solenoid; the fixed and mobile magnetic parts thus forming a two-part armature; adjustable means (36) accessible from outside the valve housing (8) to select the rest (or solenoid-unenergized) size of the gap (33); wherein the formations of the two magnetic parts within their surrounding guide (13) of the armature are such as to permit fluid flow from said passageway (7) along the armature and through the gap (33) at least in one state of energization of the solenoid; such permitted flow involving a third port (5), whereby two conditions of flow can be provided for; characterized in that

the input port (2), the output port (6), the conditionable closure (18) and said fluid passageway are all formed integrally in a common end member of the housing (8):

said common end member of the housing (8) has a cross-section substantially smaller than a portion (26) of the housing surrounding the solenoid, whereby to provide a plug in facility to a depth determined by abutment with the solenoid-surrounding housing portion (26); and

a separate magnetic piece (38) forms part of the magnetic circuit, contains a member (34,101) forming the third port (5) at an end opposite from the common housing end member, and is held at said opposite end by a turned over lip shaping (39) of said housing portion (26) surrounding the solenoid, which housing portion also receives a transverse piece (27) of said magnetic piece (38).

2. A solenoid fluid valve according to claim 1 wherein the solenoid-surrounding portion has also a turned-over lip shaping: and wherein said shaping retains both a radially outward extending flange of the common end member of the housing and a transverse base wall member (15) of the magnetic circuit; and

the base wall member (15) has a group of holes to pass a portion of the said armature and fluids along its exterior.

3. A solenoid fluid valve according to claim 1 or 2 characterized in that the second magnetic part (11) has an internal guide surface for a centrally sliding push rod (25), of which one end projects towards an abutting relationship with the first part (12), the push rod (25) is connected to a valve seat closing member (19), said bias (22) urges the push rod (25) towards said abutting relationship, and in that said first magnetic part (12) is moved during solenoid energization to drive the push rod (25) against said bias (22) and thereby to drive said closing member against its valve seat (18), whereby to shut off the second port (6) from a normally open or connected condition.

4. A solenoid fluid valve according to claim 3 characterized in that the first magnet part (12), in so moving, also opens a second valve seat (10) located adjacent said third port (5) which becomes thereby involved in said conditionally permitted flow along the armature parts.

5. A solenoid fluid valve according to claim 4 characterized in that said second valve seat (10) is located at the inner end of a bore (35) through a non-magnetic member (34), which is threaded (37) in the housing to provide both the third port (5) and the accessible adjustable means (36).

6. A solenoid fluid valve according to claim 3 characterized in that the (first) valve seat closing member (19) has a bias (20) towards closure and away from the push rod (25), and the unenergized (starting or normal) gap (33) can be adjusted to a value so as magnetically not to require initially an excess of electrical power to the solenoid, while at the same time mechanically to provide sufficient travel to allow said closing member bias (20) to provide satisfactory closure; the first mentioned bias (22) being strong enough to return the push rod (25) and moving armature part (12) quickly enough on de-energization, without requiring excess continued electrical power to the solenoid or prejudicing said satisfactory closure.

7. A solenoid fluid valve according to claim 1 characterized in that

the second magnetic part (101) is threaded (37) in the housing (8), has a bore (35) along it, carries said accessible adjusting means (36) at its end external to the housing which also provides the third port (5), and a valve seat (10) at its internal end which seat is normally (solenoid unenergized) unblocked by a closure member (104) at one end of the first movable magnetic member (102), the separation between these ends of the members (102, 101) constituting said gap, the normal value of which is adjustable by said adjusting means (36); and wherein

the other end (103) of the moving armature member (102) also provides a closure member normally applied against a valve seat (18), energization moving the movable member (102) against bias (106) to unblock the normally blocked seat (18) and to block the normally unblocked seat (10); fluid flow between the outside of said member and its guide (13) being permitted by their non-conforming confronting surfaces.

8. A solenoid fluid valve according to any of claims 1 to 7 characterized by

an interior volume (7) connected always to the second port (6), and normally to only one of the first (2) and third (5) ports and connected with the solenoid energized to only the other of the first and third ports; wherein

the connection of the interior volume (7) to the third port (5) is always along the two parts of the armature.

9. A solenoid fluid valve according to claim 8 characterized in that the first port (2) is connected to a source (3) of supply pressure, the third port (5) to an exhaust means, and the second port (6) exerts a two-state control function, according to energization or not of the solenoid.

**Revendications**

1. Une valve pour liquide à commande par solénoïde, comportant un orifice d'entrée et un orifice de sortie (2.6) séparés par une voie de passage pour le liquide, à l'intérieur d'un boîtier de valve (8), et un circuit magnétique comprenant une partie magnétique mobile (12,102) qui conditionne l'état d'un orifice obturable (18) donnant accès à ladite voie de passage, soumis à l'action d'un élément de précontrainte (22,106), avec une deuxième partie magnétique (11,101) qui reste fixe lorsque le solénoïde entre en action et qui est séparée de la partie mobile par un entrefer magnétique (33), ledit entrefer déterminant les caractéristiques de fonctionnement magnétique et se trouvant réduit temporairement chaque fois que le solénoïde est excité ; les parties magnétiques fixes et mobiles constituant ainsi un noyau magnétique en deux parties ; des moyens ajustables (36) accessibles de l'extérieur du boîtier de valve (8) permettent de choisir la valeur de repos (ou en absence d'excitation) de l'entrefer (33) ; les structures des deux parties magnétiques, à l'intérieur du manchon de guidage (13) qui les entoure, sont réalisées de manière à permettre l'écoulement du liquide depuis ladite voie de passage (7) le long du noyau et à travers l'entrefer (33) au moins dans l'un des états d'excitation ou de non excitation du solénoïde, ceci permettant le passage de l'écoulement par un troisième orifice (5), deux conditions pouvant être ainsi obtenues ; ladite valve étant caractérisée par le fait que l'orifice d'entrée (2) l'orifice sortie (6), l'orifice obturable (18) et ladite voie de passage sont tous intégrés dans un élément frontal commun du boîtier de valve (8) ; que ledit élément frontal commun du boîtier de valve (8) a une section transversale beaucoup plus petite que celle de la partie (26) du boîtier qui entoure le solénoïde, ce qui assure une possibilité d'enfichage jusqu'à une profondeur déterminée par la venue en contact avec la partie (26) du boîtier qui entoure le solénoïde et qu'une pièce magnétique séparée (38) fait partie du circuit magnétique, comprend un élément (34,101) constituant le troisième orifice (5) à l'extrémité opposée, par rapport à celle où se trouve l'élément frontal commun, et se trouve maintenue sur ladite extrémité opposée au moyen d'une lèvre rabattue (39) prévue à la périphérie de ladite partie (26) du boîtier entourant le solénoïde, partie de boîtier qui reçoit également une extension transversale (27) de ladite pièce magnétique (38).

2. Une valve pour liquide, à commande par solénoïde selon la revendication 1, dans laquelle la partie entourant le solénoïde comporte également une bordure en forme de lèvre rabattue et caractérisée par le fait

que ladite bordure retient en même temps une bride faisant partie de l'élément frontal commun du boîtier et un élément paroi transversale de base (15) du circuit magnétique, et

que l'élément paroi de base (15) comporte un groupe de trous pour le passage dudit noyau ainsi que du liquide s'écoulant à l'extérieur le long de celui-ci.

3. Une valve pour liquide, à commande par solénoïde selon les revendications 1 ou 2, caractérisée par le fait

que la deuxième partie magnétique (11) comporte une surface de guidage intérieure pour une tige poussoir (25) coulissant au centre dont une extrémité s'étend en avant et vient en contact avec la première partie (12), la tige poussoir (25) est reliée à un élément (19) obturant le siège de soupape, ledit élément de précontrainte (22) agissant sur la tige poussoir (25) pour la maintenir en contact comme indiqué ci-dessus, et que ladite première partie magnétique (12) se déplace lorsque le solénoïde est excité pour pousser la tige (25) en agissant contre ledit élément de précontrainte (22) et pour plaquer ainsi ledit élément obturateur contre le siège de soupape (18) et obtenir ainsi l'obturation du deuxième orifice (6) en partant d'un état normalement ouvert ou de connexion établie.

4. Une valve pour liquide, à commande par solénoïde, selon la revendication 3, caractérisée par le fait qu'en se déplaçant ainsi la première pièce magnétique (12) ouvre en même temps un deuxième siège de soupape (10) disposé adjacent au dit troisième orifice (5) intervient ainsi dans la procédure d'autorisation de l'écoulement le long des pièces qui constituent le noyau.

5. Une valve pour liquide, à commande par solénoïde, selon la revendication 4, caractérisée par le fait que ledit deuxième siège de soupape (10) est situé à l'extrémité intérieure d'un forage (35) traversant une pièce filetée non magnétique (34), avec un filetage (37), qui est vissée dans le boîtier pour réaliser aussi bien le troisième orifice (5) que le moyen ajustable accessible (36).

6. Une valve pour liquide, à commande par solénoïde selon la revendication 3, caractérisée par le fait que l'élément obturateur (19) du (premier) siège de soupape est soumis à l'action d'un élément de précontrainte (20) qui le pousse vers la fermeture, tendant à l'éloigner de la tige poussoir (25), et que l'entrefer (33) en l'absence d'excitation, peut être ajusté à une valeur telle que la puissance nécessaire pour le fonctionnement magnétique du solénoïde ne soit pas excessive et qu'en même temps, mécaniquement, la course autorisée soit suffisante pour que ledit élément de précontrainte (20) de l'élément obturateur assure une obturation satisfaisante ; le premier cité (22) des éléments de précontrainte étant suffisamment fort pour assurer un retour suffisamment rapide de la tige poussoir (25) et de la partie mobile (12) du noyau lorsque le solénoïde n'est plus excité, sans que cela nécessite une puissance d'excitation continue excessive du solénoïde ni porte préjudice à la qualité satisfaisante de ladite obturation.

7. Une valve pour liquide, à commande par solénoïde, selon la revendication 1, caractérisée par le fait que la deuxième pièce magnétique (101) avec un filetage (37) est vissée dans le boîtier (8), qu'elle comporte un forage (35) dans le sens de la longueur, ainsi que ledit moyen d'ajustage (36) à son extrémité qui est à l'extérieur par rapport au boîtier, avec le troisième orifice (5) et à son extrémité qui est à l'intérieur du boîtier un siège de soupape (10), siège qui normalement, (lorsque le solénoïde n'est pas excité), se trouve dégagé par un élément obturateur (104) disposé à l'extrémité de la première pièce magnétique mobile (102), l'intervalle entre ces extrémités desdites pièces (102,101) constituant ledit entrefer dont la valeur normale peut être ajustée avec ledit moyen de réglage (36), et

que l'autre extrémité (103) de la partie mobile (102) constituant aussi un élément obturateur normalement appliqué contre un siège de soupape (18), l'excitation du solénoïde déterminant un déplacement de la pièce mobile (102) contre le ressort de précontrainte (106) pour dégager le siège (18) normalement obturé et pour obturer le siège (10) qui est normalement dégagé ; l'écoulement du liquide entre l'extérieur de ladite pièce et son manchon de guidage (13) étant autorisé du fait de la non concordance des surfaces en regard.

8. Une valve pour liquide, à commande par solénoïde, selon l'une quelconque des revendications de 1 à 7, caractérisée par le fait qu'un espace intérieur (7) est relié en permanence au deuxième orifice (6) et, normalement à un seul des deux autres orifices, au premier (2) ou au troisième (5) et seulement à l'autre de ces deux orifices lorsque le solénoïde est excité ; la liaison entre ledit espace intérieur (7) et le troisième orifice (5), lorsqu'elle a lieu, étant toujours réalisée le long des deux parties du noyau.

9. Une valve pour liquide à commande par solénoïde, selon la revendication 8, caractérisée par le fait que le premier orifice (2) est relié à une source (3) d'alimentation sous pression, que le troisième orifice (5) est relié à un dispositif d'échappement, et que le deuxième orifice (6) assume une fonction de commande à deux états, selon que le solénoïde est ou n'est pas excité.

**Patentansprüche**

1. Magnetventil für Fluide mit einem Eingangs- und einem Ausgangsanschluß (2,6), die voneinander mittels eines in einem Ventilgehäuse (8) befindlichen Fluidkanals (7) getrennt sind; mit einem Magnetkreis, der zum verschließen einer Öffnung (18) des Kanals ein unter dem Einfluß einer vorspannung (22,106) stehendes bewegliches magnetisches Element (12,102) enthält; sowie mit einem zweiten magnetischen Element (11,101), das während der Betätigung der Magnetspule festliegt und von dem beweglichen Element durch einen Luftspalt (33) beabstandet ist, wobei der Spalt die Charakteristik der magnetischen Betätigung beeinflußt und im Betrieb jeweils bei der Beaufschlagung der Magnetspule mit Strom reversibel verkleinert wird und das die festen sowie das bewegliche magnetische Element somit einen zweiteiligen Anker bilden; und mit einstellbaren, von außerhalb des Ventilgehäuses (8) zugänglichen Mitteln (36) zum Wählen der Ruheabmessungen (bei stromloser Magnetspule) des Spaltes (33); wobei die Gestalten der beiden in der sie umgebenden Führung (13) befindlichen magnetischen Elemente des Ankers derart sind, daß sie in wenigstens einem Betätigungszustand der Magnetspule einen Fluidstrom von dem Kanal (7) entlang der Anordnung und durch den Spalt (33) gestatten; wodurch der somit mögliche Strom einen dritten Anschluß (5) nutzt, so daß zwei Strömungszustände vorgesehen sind; dadurch gekennzeichnet, daß der Eingangsanschluß (2), der Ausgangsanschluß (6), die zu betätigende Öffnung (18) und der Fluidkanal einstückig in einem gemeinsamen Endabschnitt des Gehäuses (8) ausgebildet sind;

   daß der gemeinsame Endabschnitt des Gehäuses (8) einen wesentlich kleineren Querschnitt aufweist, als ein Abschnitt (26) des die Magnetspule umgebenden Gehäuses, so daß eine Einsteckmöglichkeit bis zu einer bestimmten, durch Anstoßen an den die Magnetspule umgebenden Gehäuseabschnitt (26) festgelegten Tiefe ermöglicht wird;

   und daß ein separates magnetisches Element (38) einen Teil des Magnetkreises bildet, ein den dritten Anschluß (5) an einem Ende gegenüber des gemeinsamen Gehäuseendstücks bildendes Element (34,101) umfaßt und an dem gegenüberliegenden Ende von einer umgebördelten Lippenanordnung (39) des die Magnetspule umgebenden Gehäuseabschnitts (26) gehalten wird, wobei der Gehäuseabschnitt auch einen quer sich erstreckenden Abschnitt (27) des magnetischen Elements (38) umgibt.

2. Magnetventil für Fluide nach Anspruch 1, bei dem der den Magneten umgebende Abschnitt ebenfalls die Form einer umgebördelten Lippenanordnung aufweist und wobei die Anordnung sowohl einen radial nach außen gerichteten Flansch des gemeinsamen Endabschnitts des Gehäuses als auch ein quer sich erstreckendes Stirnwandglied des Magnetkreises hält; und daß das Stirnwandglied (15) eine Gruppe von Löchern aufweist, um einen Teil des Ankers sowie Fluide entlang seiner Außenwand passieren zu lassen.

3. Magnetventil für Fluide nach Anspruch 1 oder 2, dadurch gekennzeichnet, daß das zweite magnetische Element (11) eine innere Führungsfläche für eine zentral gleitende Schubstange (25) aufweist, deren eines Ende sich zu dem ersten Element (12) an diesem anliegend erstreckt, wobei die Schubstange (25) mit einem den Ventilsitz verschließenden Element (19) verbunden ist, und die Vorspannung (22) die Schubstange (25) in Richtung auf die Anlage drückt, und daß das erste magnetische Element (12) bei einer Versorgung der Magnetspule mit Strom bewegt wird und die Schubstange (25) entgegen der Vorspannung (22) antreibt und dadurch das verschließende Element gegen seinen Ventilsitz (18) treibt, wodurch der zweite Anschluß (6) ausgehend von seinem im Ruhezustand normalerweise of-fenen oder durchlässigen Zustand verschlos-sen wird.

4. Magnetventil für Fluide nach Anspruch 3, dadurch gekennzeichnet, daß das erste magnetische Element (12) während seiner Bewegung auch einen zweiten Ventilsitz (10) öffnet, der dem dritten Anschluß (5) benachbart angeordnet ist, so daß der dritte Anschluß (5) dadurch mit der entsprechend den Betriebszuständen möglichen Strömung entlang den Ankeiteilen beaufschlagt wird.

5. Magnetventil für Fluide nach Anspruch 4, dadurch gekennzeichnet, daß der sich zweite Ventilsitz (10) an dem inneren Ende einer Bohrung (35) durch ein nichtmagnetisches Element (34) befindet, das in das Gehäuse eingeschraubt ist (37) und sowohl den dritten Anschluß (5) als auch die zugänglichen einstellbaren Mittel (36) darstellt.

6.  Magnetventil für Fluide nach Anspruch 3, dadurch gekennzeichnet, daß das (erste) den Ventilsitz verschließende Element (19) unter einer Vorspannung (20) in Richtung des Verschließens und von der Schubstange (25) weg gerichtet steht, und daß der (Anfangs- oder Ruhe-) Spalt (33) in unbetätigtem Zustand auf einen Wert eingestellt werden kann, so daß wegen der magnetischen Wirkung anfangs keine übermäßige elektrische Leistung für die Magnetspule notwendig ist, während gleichzeitig mechanisch ein ausreichender Weg zur Verfügung steht, damit die Vorspannung (20) für das verschließende Element ein ausreichendes Verschließen erlaubt; wobei die erstgenannte Vorspannung (22) kräftig genug ist, um die Schubstange (25) und den beweglichen Ankerteil (12) der Anordnung bei einem Abschalten schnell genug zurückzuziehen, ohne andererseits andauernde übermäßige elektrische Leistung an dem Magneten zu erfordern und ohne eine ausreichende Abdichtung zu beeinträchtigen.

7.  Magnetventil für Fluide nach Anspruch 1, dadurch gekennzeichnet, daß

    das zweite Element (101) in das Gehäuse (8) eingeschraubt (37) ist, eine in Längsrichtung verlaufende Bohrung (35) enthält, die zugänglichen einstellbaren Mittel (36) an seinem aus dem Gehäuse herausragenden Ende trägt, das außerdem den dritten Anschluß (5) bildet, sowie einen Ventilsitz (10) an seinem inneren Ende aufweist, der im Ruhezustand (bei stromloser Magnetspule) nicht von einem an einem Ende des ersten beweglichen magnetischen Ankerteils (102) befindlichen Verschlußglied (104) verschlossen wird, wobei der Abstand zwischen diesen Enden dieser Teile (102,101) den Spalt bildet, dessen Ruhewert mittels der Einstellmittel (36) einstellbar ist; und wobei

    das andere Ende (103) des beweglichen Ankerteils (102) ebenfalls ein Verschlußglied bildet, das im Ruhezustand an einem Ventilsitz (18) anliegt, so daß bei Beaufschlagung mit Strom der bewegliche Teil (102) entgegen der Vorspannung (106) bewegt wird, um den im Ruhezustand geschlossenen Sitz (18) zu öffnen und den im Ruhezustand geöffneten Sitz (10) zu verschließen; wobei ein Fluidstrom zwischen der Außenseite des Gliedes und seiner Führung (13) wegen ihrer nicht übereinstimmenden, einander gegenüberliegenden Oberflächen möglich ist.

8.  Magnetventil für Fluide nach einem der Ansprüche 1-7, dadurch gekennzeichnet, daß ein internes Volumen (7) vorhanden ist, das mit dem zweiten Anschluß (6) ständig und im Ruhezustand nur mit entweder dem ersten (2) oder dem dritten (5) Anschluß strömungsmäßig in Verbindung steht und das bei mit Strom beaufschlagter Magnetspule nur mit dem jeweils anderen Anschluß, entweder dem ersten (2) oder dem dritten (5) Anschluß strömungsmäßig in Verbindung steht, und daß die strömungsmäßige Verbindung des internen Volumens (7) mit dem dritten Anschluß (5) immer entlang der beiden Elemente des Ankers erfolgt.

9.  Magnetventil für Fluide nach Anspruch 8, dadurch gekennzeichnet, daß der erste Anschluß (2) mit einer Druckversorgungsquelle (3) verbunden ist, daß der dritte Anschluß (5) mit einem Auslaßmittel verbunden ist, und daß der zweite Anschluß (6) eine Steuerfunktion mit zwei Zuständen je nach der Beaufschlagung oder Nichtbeaufschlagung der Magnetspule mit Strom ausübt.

Fig.1.

EXHAUST

"Supply" pressure source

"CONTROL" PORT.

Fig.2.